(19) **Europäisches Patentamt**
**European Patent Office**
**Office européen des brevets**

(11) **EP 3 862 834 B1**

(12) **EUROPEAN PATENT SPECIFICATION**

(45) Date of publication and mention
of the grant of the patent:
**28.09.2022 Bulletin 2022/39**

(21) Application number: **20198621.3**

(22) Date of filing: **28.09.2020**

(51) International Patent Classification (IPC):
**G05B 23/02** *(2006.01)*

(52) Cooperative Patent Classification (CPC):
**G05B 23/0278;** G05B 2219/23005;
G05B 2219/24087

(54) **DESIGN SUPPORT SYSTEM**

DESIGNHILFESYSTEM

SYSTÈME DE SUPPORT DE CONCEPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2020 JP 2020018403**

(43) Date of publication of application:
**11.08.2021 Bulletin 2021/32**

(73) Proprietor: **Hitachi, Ltd.**
**Tokyo 100-8280 (JP)**

(72) Inventors:
• **MUTO, Kazuo**
**Tokyo 100-8280 (JP)**

• **NAMBA, Yasuharu**
**Tokyo 100-8280 (JP)**
• **HITOMI, Shuntaro**
**Tokyo 100-8280 (JP)**
• **UKAI, Toshiyuki**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**US-A- 5 596 712        US-A1- 2005 049 988
US-A1- 2005 177 341     US-A1- 2012 310 597
US-A1- 2013 332 383**

**Description**

BACKGROUND OF THE INVENTION

1. Field of the Invention

The present invention relates to a design support system that supports product design, and more particularly to a design support system that supports investigation of the cause of product failure by collecting and analyzing maintenance records by maintenance personnel.

2. Description of Related Art

In order to improve product design, it is important to analyze how to use the product or the usage environment when a product failure occurs and to understand the cause of the failure. As useful data for understanding how to use the product or the usage environment, there are maintenance records in which the measured values of the sensors attached to the product, various logs generated in relation to the product, maintenance personnel who maintains and repairs the product, and the like are recorded.

Among these, as a design support device that uses a maintenance record, for example, JP-A-2012-150686 is known. In the abstract thereof, in order to "support plant safety design in cooperation with plant monitoring and maintenance activities", it is described that "A communication device 140, a diagnostic monitoring device 110, a failure inspection/management device 120, and a design/manufacturing device 130 are connected to each other via a network 150 to form a plant safety design support device 100. The diagnostic monitoring device 110 receives plant state information dc from a plant control system 1 to monitor or diagnose the plant, the failure inspection management device 120 holds failure inspection information D2 of an equipment used in the plant, and the design/manufacturing device 130 holds design/manufacturing information of the equipment used in the plant. The design/manufacturing device 130 receives the failure inspection information D2 from the failure inspection management device 120, and designs the plant safely in consideration of the failure inspection information.".

In other words, JP-A-2012-150686 suggests a design support device that stores failure inspection information of a plant and uses the stored failure inspection information for safety design of the plant.

Since the failure inspection information used in JP-A-2012-150686 is information that has a high degree of freedom to be input by a person, there is an advantage of being able to record a situation that cannot be understood from sensor measurement values or various logs, but the failure inspection information is strong in terms of work record for reporting purposes, and does not always include the information necessary for investigating the failure cause. Furthermore, US 2005/049 988 A1 discloses a method of providing data for analysis of at least one possible root cause of an event, wherein the data is adapted to be processed by an analyser function of a control system. Eventually, US 2012/310 597 A1 discloses a method for estimating failure causes including failure phenomena and failure parts by operational data about the equipment in an abnormal state.

Therefore, an object of the present invention is to provide a design support device that allows the maintenance personnel to input the failure symptom useful for investigating the failure cause using the knowledge of a designer, and updates a failure causal model for modelling a causal relationship between the failure cause and the failure symptom. Another object of the present invention is to provide a design support device that can present a more appropriate failure cause to a designer by using the updated failure causal model.

SUMMARY OF THE INVENTION

In order to solve the above-described problem, there is provided a design support system according to claim 1.

By using the design support device of the invention, information necessary for investigating the cause of product failure can be efficiently collected through maintenance work, and the number of steps required for the designer to investigate the cause of failure can be reduced. In addition, by presenting the plausible cause of the failure, it becomes possible to take fundamental measures such as changing the product design, and to reduce the frequency of maintenance performed by maintenance personnel. Furthermore, based on the failure causal model, by narrowing down the causes for inputting the authenticity in accordance with the symptom of a target equipment, it is possible to save the time and effort required by the maintenance personnel to make an authenticity input.

BRIEF DESCRIPTION OF THE DRAWINGS

FIG. 1 is a functional block diagram of a design support device according to Example 1;

FIG. 2 is an explanatory view of a failure causal model in the design support device according to Example 1;

FIG. 3 is an explanatory view of a maintenance record database in the design support device according to Example 1;

FIG. 4 is an explanatory view of a data flow of the design support device according to Example 1;

FIG. 5 is a flowchart describing a processing flow of Example 1;

FIG. 6 is an example of a display screen of a designer terminal in the design support device of Example 1;

FIG. 7 is an example of an updating method of the failure causal model in the design support device according to Example 1;

FIG. 8 is an example of a display screen of a maintenance personnel terminal in the design support device of Example 1;

FIG. 9 is a functional block diagram of a design support device according to Example 2;

FIG. 10 is an explanatory view of a data flow of the design support device according to Example 2; and

FIG. 11 is a flowchart describing a processing flow of Example 2.

## DESCRIPTION OF EMBODIMENTS

Hereinafter, examples of a design support device of the invention will be described in detail with reference to the drawings.

[Example 1]

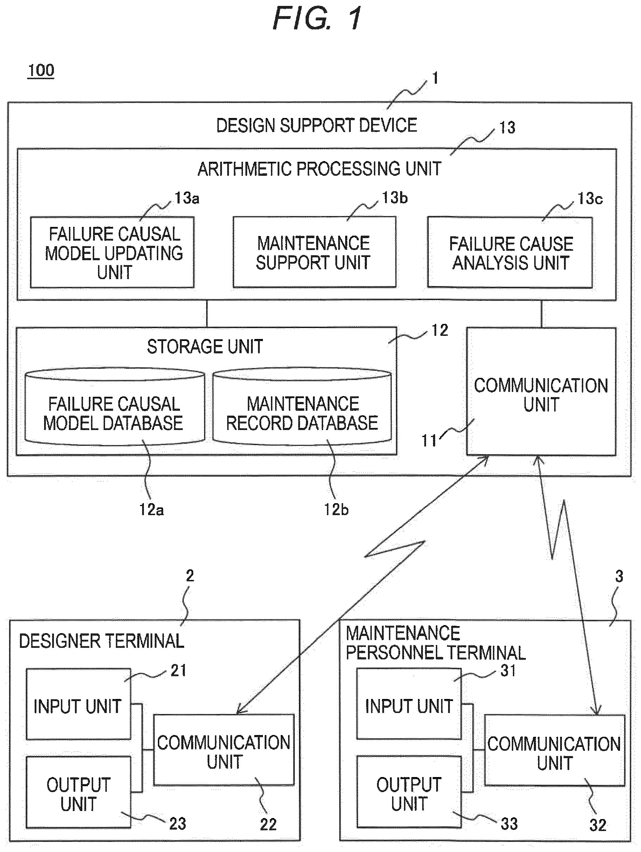

A design support system 100 according to Example 1 of the invention will be described with reference to FIGS. 1 to 8.

FIG. 1 is a functional block diagram of the design support system 100 of the example. As illustrated here, the design support system 100 includes a design support device 1 installed on a center side, a designer terminal 2 used by a designer 20, and a maintenance personnel terminal 3 used by a maintenance personnel 30. Each of the design support device 1, the designer terminal 2, and the maintenance personnel terminal 3 is a computer such as a server, a personal computer, or a tablet including a computing device such as a CPU, a storage device such as a hard disk or a semiconductor memory, and various input/output devices, and realizes each function described below by executing a program by the computing device. Hereinafter, the examples will be described in detail while omitting well-known techniques in the computer field.

The designer terminal 2 is a computer including an input unit 21, a communication unit 22, and an output unit 23. The input unit 21 is various input devices such as a keyboard, a mouse, and a touch panel, and is used when the designer 20 inputs some data. The communication unit 22 transmits the data input by the designer 20 using the input unit 21 to the design support device 1 or receives the data transmitted from the design support device 1. The output unit 23 is an output device such as a display device, and displays the data transmitted from the design support device 1 or displays the screen for interactive processing.

The maintenance personnel terminal 3 is a computer including an input unit 31, a communication unit 32, and an output unit 33. The maintenance personnel terminal 3 is a computer similar to the designer terminal 2 although the usage is different from that of the user, and thus the duplicated description of each unit will be omitted.

The design support device 1 is a computer including a communication unit 11, a storage unit 12, and an arithmetic processing unit 13.

The communication unit 11 receives the data input to the designer terminal 2 or the maintenance personnel terminal 3, and delivers the received data to the arithmetic processing unit 13 or transmits the processing result of the arithmetic processing unit 13 to the designer terminal 2 or the maintenance personnel terminal 3.

The storage unit 12 is specifically a storage device such as a hard disk, and stores a failure causal model database 12a, a maintenance record database 12b, and the like.

The failure causal model database 12a is a database that stores a failure causal model M for associating the cause of a failure i (i = 1, 2, ..., and N) with the symptom of the product when the failure i occurs. Here, the cause represents a factor related to design and manufacturing such as product type and used components that may cause a failure, or a factor related to usage conditions such as installation location and years of operation. Meanwhile, in a case of a heating equipment, for example, the symptom refers to a state where the function of the product is impaired, for example, power source cannot be turned on and the heater does not heat. The failure causal model M includes not only the cause and failure, and the presence or absence of the cause of the failure and the symptom, but also an occurrence probability p (failure i|cause j) of the failure i when a cause j is true, or an occurrence probability p (symptom k|failure i) of the symptom k when the failure i is true. In addition, p(A|B) represents the conditional probability of an event A when an event B occurs.

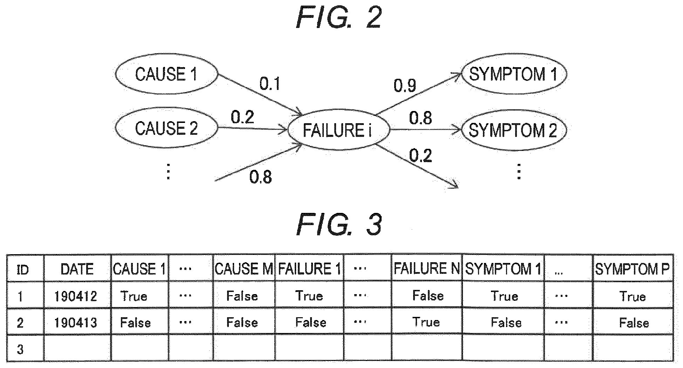

FIG. 2 illustrates an example of the failure causal model M stored in the failure causal model database 12a.

The failure causal model M describes the causal relationship regarding a certain failure i. On the left side, the occurrence probability of the failure i when the cause 1 is true is 0.1, and the occurrence probability of the failure i when the cause 2 is true is 0.2. On the other hand, on the right side, when the failure i occurs, the occurrence probability of the symptom 1 is 0.9, and the occurrence probability of the symptom 2 is 0.8.

Further, FIG. 3 illustrates an example of the maintenance record database 12b. The maintenance record database 12b is a database that records the authenticity of each cause, failure, and symptom, which are configuration elements of the failure causal model M, at each maintenance work. Each row of FIG. 3 is a table data corresponding to each maintenance work, and the authenticity information input by the maintenance personnel 30 is registered with respect to all of the configuration elements (cause, failure, and symptom) of the failure causal model M following the ID at the beginning and the maintenance date. The method of registering the authenticity information will be described later.

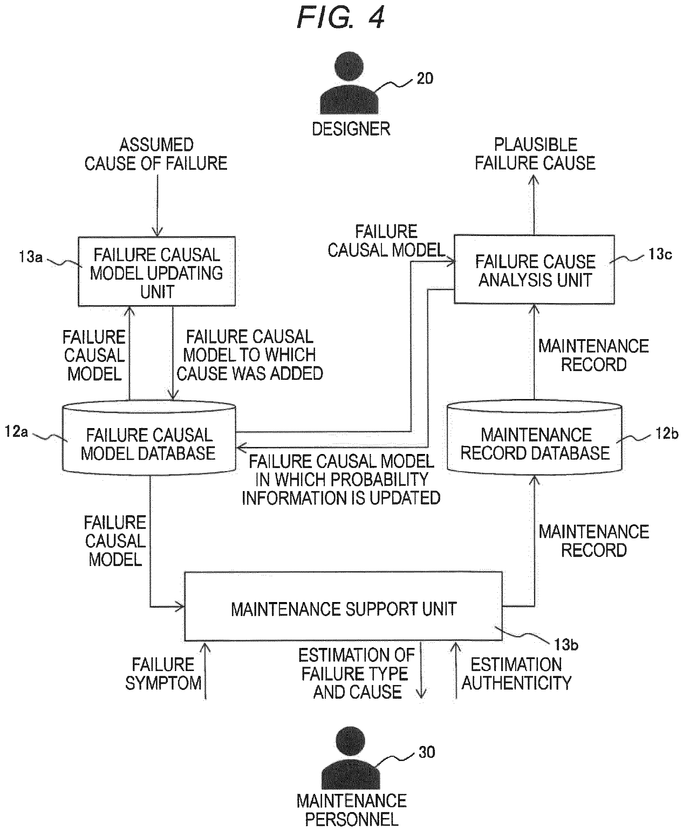

The arithmetic processing unit 13 is specifically a central processing unit (CPU), and by executing a predetermined program, each function of the failure causal model updating unit 13a, the maintenance support unit 13b, and the failure cause analysis unit 13c is executed. Hereinafter, each function will be sequentially described with reference to FIG. 4.

In a case where the designer 20 adds a factor (assumed cause) that is considered as a cause of the failure i to the designer terminal 2, the failure causal model updating unit 13a uses the added assumed cause to update the failure causal model M related to the failure i stored in the failure causal model database 12a and to store the updated failure causal model M in the failure causal model database 12a.

In a case wheres the maintenance personnel 30 inputs the symptom of the maintenance target equipment to the maintenance personnel terminal 3, the maintenance support unit 13b uses the failure causal model M in the failure causal model database 12a to estimate the type of the failure corresponding to the input symptom. Then, the maintenance personnel 30 displays a screen for inputting the type of failure, the cause thereof, and the authenticity on the maintenance personnel terminal 3. Furthermore, the maintenance personnel 30 stores the authenticity data input to the maintenance personnel terminal 3 in the maintenance record database 12b.

The failure cause analysis unit 13c updates the probability information of the failure causal model M of the failure causal model database 12a by using the maintenance record of the maintenance record database 12b. Further, the plausible cause for the failure i (i = 1, 2, ..., and N) is presented to the designer 20 via the designer terminal 2 based on the updated probability information.

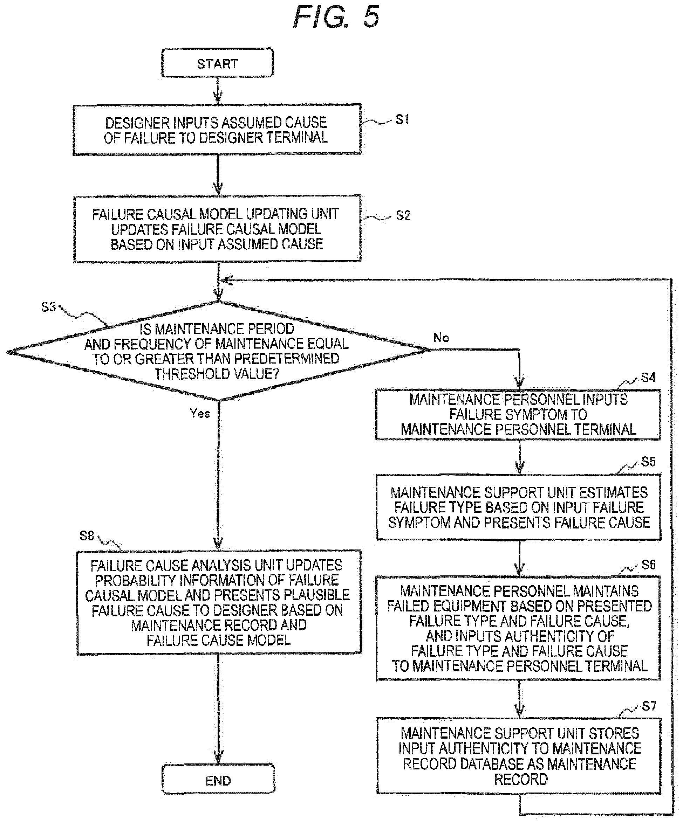

FIG. 5 is a flow chart illustrating a processing flow of the design support system 100 of the example, which is outlined in FIG. 4, and using this, the failure causal model updating unit 13a, the maintenance support unit 13b, and the failure cause analysis unit 13c will be described in more detail. The processing of FIG. 5 is executed for reflecting the assumed cause to the failure causal model M based on the knowledge of the designer 20 in a case where the designer 20 determines that the failure occurrence tendency of the maintenance target product has changed in consideration of the defectiveness of the failure cause presented by the design support system 100.

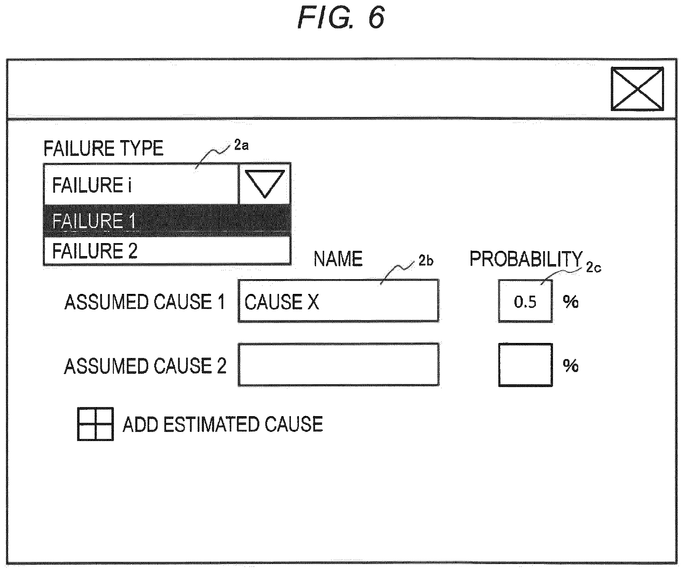

First, in step S1, the designer 20 uses the designer terminal 2 to add the assumed cause of an unregistered failure to the current failure causal model M. FIG. 6 illustrates an example of the input screen displayed on the designer terminal 2. In this example, after selecting the failure for which the assumed cause is to be added from a pull-down 2a, using the knowledge of the designer 20, the designer 20 inputs the name of the assumed cause for the failure into an input field 2b and the occurrence probability of failure when the assumed cause is true into a probability field 2c. Since the numerical values input into the probability field 2c can be optimized by the learning processing described below, the numerical value input by the designer 20 may be omitted in this step, and in this case, a temporary numerical value may be input as the initial value.

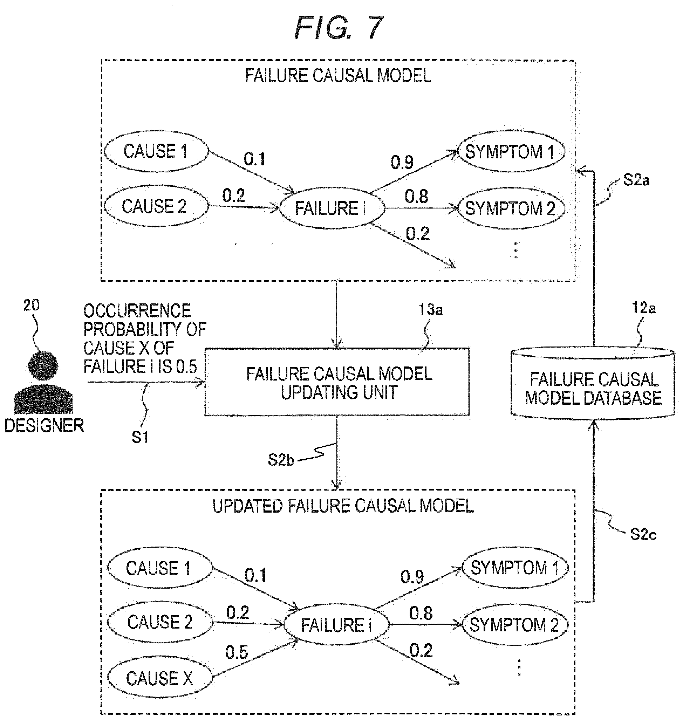

Next, in step S2, the failure causal model updating unit 13a of the design support device 1 reflects the new assumed cause input in step S1 on the failure causal model M. FIG. 7 is a view schematically illustrating the procedure for updating the failure causal model M by the failure causal model updating unit 13a. This drawing illustrates a state where the failure causal model M is updated after the designer 20 adds "cause X" as the assumed cause of the failure i in step S1. First, the failure causal model updating unit 13a extracts the current failure causal model M regarding the failure i from the failure causal model database 12a (S2a) . Next, the assumed cause "cause X" input by the designer 20 into the failure causal model M and the occurrence probability thereof are added (S2b), and the updated failure causal model M is stored in the failure causal model database 12a (S2c).

The above-described processing of steps S1 and S2 is executed before the maintenance work of the maintenance personnel 30.

Next, in step S3, it is determined whether to present the designer 20 with the failure cause obtained by the updated failure causal model M in accordance with the length of the maintenance period or the frequency of maintenance. In a case where the maintenance period or the frequency of maintenance exceeds a predetermined threshold value and it is possible to determine that the failure cause obtained by the updated failure causal model M is reliable, the process proceeds to step S8, and in an opposite case, the process proceeds to step S4.

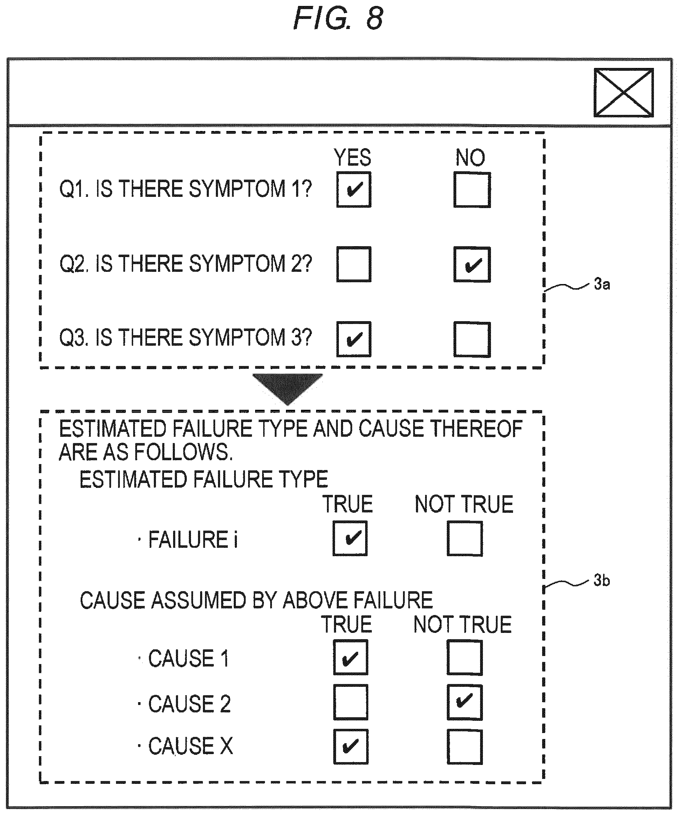

In step S4, the maintenance personnel 30 uses the maintenance personnel terminal 3 to input the symptom of the target equipment into the maintenance support unit 13b when the failed equipment is maintained. FIG. 8 is an example of a display screen of the maintenance personnel terminal 3. At the time of execution of this step, the maintenance support unit 13b displays an input area 3a for inputting the presence or absence of the symptom of the failed equipment on the maintenance personnel terminal 3. The symptom to be input next regarding the presence or absence of the symptom may be dynamically changed from the already input symptom.

Next, in step S5, the maintenance support unit 13b uses the updated failure causal model M to calculate the occurrence probability of each failure from the symptoms of the failed equipment input in step S4. Then, the failure type having the highest occurrence probability is presented in the input area 3b of the maintenance personnel terminal 3. The occurrence probability of each failure can be calculated as follows, for example. When there is the failure causal model M in which the symptom 1, the symptom 2, and the symptom 3 occur when the failure i occurs, an occurrence probability p (failure i|symptom 1 = $TF_1$, symptom 2 = $TF_2$, symptom 3 = $TF_3$) of the failure i when an authenticity $TF_k$ of the symptom k (k = 1, 2, and 3) is observed can be calculated as in (Equation 1) using Bayes' theorem.

[Equation 1]

$$p(Failure\ i|Symptom1 = TF_1,\ Symptom2 = TF_2,\ Symptom3 = TF_3)$$
$$\propto \sum_{k=1}^{3} p(Symptom\ k = TF_k|Failure\ i)\,p(Failure\ i)$$

Here, p (failure i) is the occurrence probability of the failure i, and is estimated from the past maintenance record and the like.

In the example of FIG. 8, the maintenance personnel 30 confirms the failed equipment and inputs the presence or absence of the symptom (for example, symptoms 1 to 3) into, for example, check boxes in the input area 3a. Then, the maintenance support unit 13b presents the type of failure (for example, failure i) together with the cause (causes 1, 2, and X) thereof in the input area 3b based on the presence or absence of the input symptom.

Next, in step S6, the maintenance personnel 30 maintains the failed equipment based on the failure estimated by the system and the cause thereof, and inputs the authenticity of the failure and the cause thereof which are found as a result of the actual maintenance work into check boxes of the input area 3b. The authenticity data input by the maintenance personnel 30 into the input area 3b is input into the maintenance support unit 13b as a maintenance record.

Next, in step S7, the maintenance support unit 13b causes the maintenance record database 12b to store the authenticity data input by the maintenance personnel 30 in step S6 as a maintenance record.

When the processing of steps S4 to S7 are repeated and a certain amount or more of maintenance records are stored, the process proceeds from step S3 to step S8. Then, the failure cause analysis unit 13c updates the probability information of the failure causal model M in the failure causal model database 12a based on the maintenance record. Accordingly, the numerical value temporarily input by the designer 20 in step S1 is updated to a more appropriate numerical value. Then, the assumed cause having the highest occurrence probability of the failure i, that is, the failure cause having the highest p (failure i|cause j), which is obtained by using the updated failure causal model M, is presented to the designer as the cause of the failure i being true. In addition, a plurality of causes with a high occurrence probability of failure may be presented at the same time.

Here, the update of the probability information based on the maintenance record input by the maintenance personnel 30 can be performed, for example, as in (Equation 2) and (Equation 3).

[Equation 2]

$$p(Failure\ i|Cause\ j) = \frac{Frequency\ of\ cases\ where\ cause\ is\ cause\ j\ when\ failure\ i\ occurs}{Frequency\ of\ cases\ where\ cause\ is\ j}$$

[Equation 3]

$$p(Symptom\ k|Failure\ i) = \frac{Frequency\ of\ cases\ where\ symptom\ is\ symptom\ k\ when\ failure\ i\ occurs}{Frequency\ of\ cases\ where\ failure\ i\ occurs}$$

As described above, according to the design support system of the example, since the knowledge of the designer can be utilized to efficiently collect the failure symptoms useful for investigating the failure cause from the maintenance personnel, it is possible to easily improve the failure causal model for modeling the causal relationship between the failure cause and the failure symptom. Therefore, after the failure causal model is improved, a more appropriate failure cause corresponding to the symptom observed by the maintenance personnel can be presented to the designer.

[Example 2]

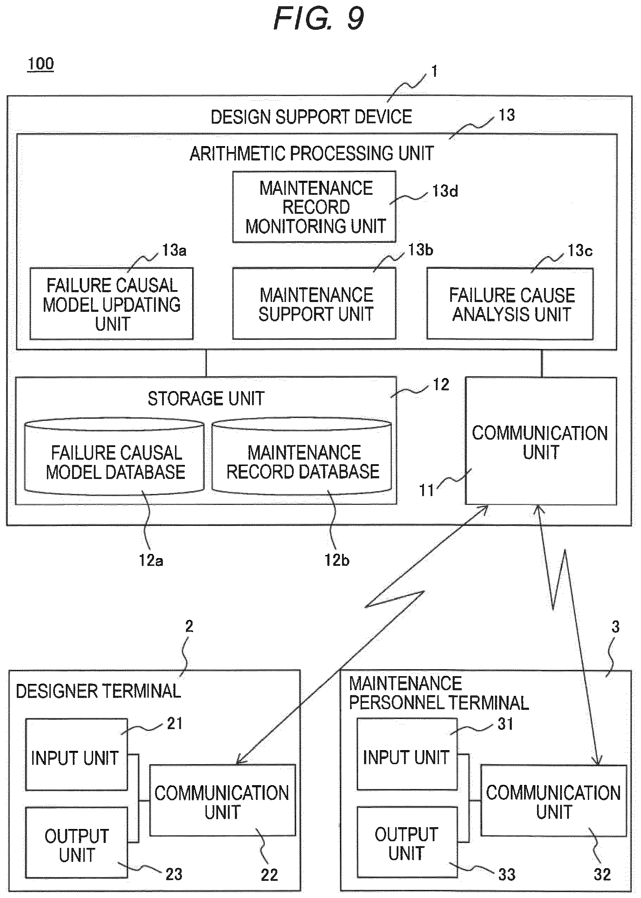

Next, the design support system 100 according to Example 2 of the invention will be described with reference to FIGS. 9 to 11. The overlapping description of the common points with Example 1 will be omitted.

FIG. 9 is a functional block diagram of the design support system 100 of the example. As illustrated here, in the arithmetic processing unit 13 of the example, a maintenance record monitoring unit 13d is added to the failure causal model updating unit 13a, the maintenance support unit 13b, and the failure cause analysis unit 13c described in Example 1.

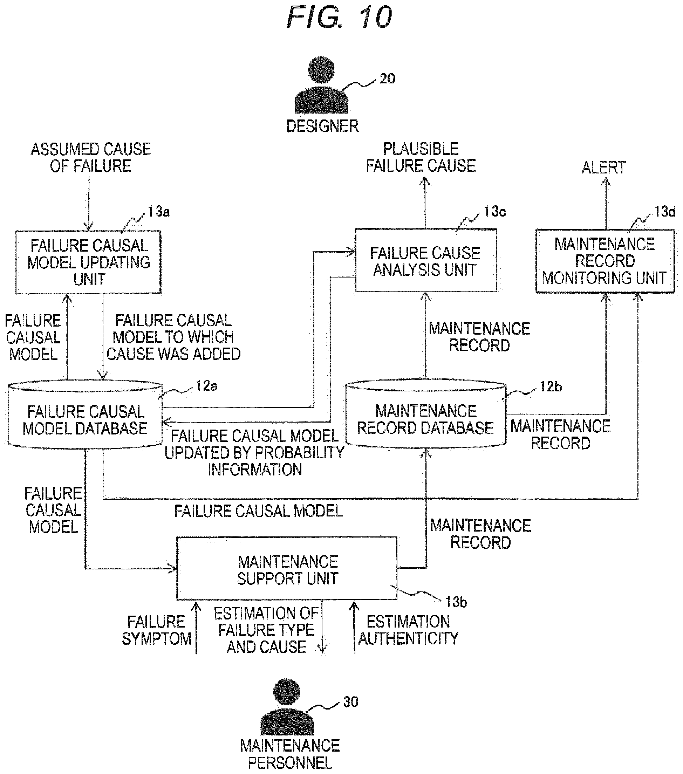

FIG. 10 is a view in which the role of the maintenance record monitoring unit 13d added in the example is added to FIG. 4 of Example 1. As illustrated here, the maintenance record monitoring unit 13d monitors the maintenance records stored in the maintenance record database 12b, issues an alert to the designer 20 when the tendency of failure occurrence changes, and urges to take measures . In other words, in Example 1, the designer 20 himself or herself determines the update timing of the failure causal model M, but in the example, the design support system 100 determines the update timing of the failure causal model M.

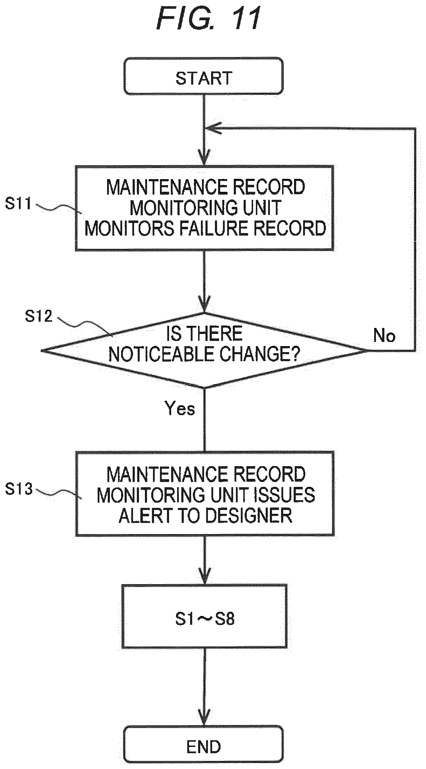

FIG. 11 is a flowchart illustrating a processing flow of the design support system 100 of the example. In the first step S11, the maintenance record monitoring unit 13d monitors the maintenance records stored every day. In step S12, the maintenance record monitoring unit 13d determines whether or not there is a noticeable change in the failure occurrence tendency. When there is a noticeable change, the process proceeds to step S13, and when there is no noticeable change, the process returns to step S11.

In step S13, the maintenance record monitoring unit 13d issues an alert for urging the designer 20 to update the failure causal model M via the designer terminal 2, and when the designer 20 responds, the processing from step S1 to step S8 described in Example 1 is executed. The alert in step S13 is issued, for example, when the abnormality degree regarding the failure i calculated by (Equation 4) exceeds a certain value.

[Equation 4]

$$(Abnormality\ degree\ related\ to\ failure\ i) = -\log(p_{0:T-1}^{i}(n_{T}^{i}))$$

Here, $n^{i}T$ on the right side of Equation 4 is the number of cases of occurrence of a failure mode i in a period T, and T represents the latest period. Further, the true number of the abnormality degree defined by the Equation 4 (the value in the parenthesis on the right side of Equation 4) is the empirical occurrence probability of the failure mode i per unit period, which is calculated from the maintenance records from the period 0 to T-1. Assuming that the empirical occurrence probability follows a normal distribution, an average $\mu^{i}_{0:T-1}$ and a variance $\sigma^{i}_{0:T-1}$ can be calculated by (Equation 5) and (Equation 6), respectively.

[Equation 5]

$$\mu_{0:T-1}^{i} = \frac{\sum_{t=0}^{T-1}(Number\ of\ cases\ of\ occurrence\ of\ failure\ mode\ i\ in\ period\ t)}{(Number\ of\ periods\ from\ 0\ to\ T-1)}$$

[Equation 6]

$$\sigma_{0:T-1}^{i} = \frac{\sum_{t=0}^{T-1}\{(Number\ of\ cases\ of\ occurrence\ of\ failrue\ mode\ i\ in\ period\ t) - \mu_{0:T-1}^{i}\}^{2}}{(Number\ of\ periods\ from\ 0\ to\ T-1) - 1}$$

As described above, according to the design support system 100 of the example, when the tendency change of the failure occurrence of the maintenance target product is detected by using Equations 4 to 6, it is possible to urge the designer 20 to update the failure causal model M. Therefore, even when the designer 20 is an unskilled person, it is possible to start the update work of the failure causal model M at an appropriate timing.

**Claims**

1.  A design support system comprising:

    a designer terminal (2) for use by designers (20);
    a maintenance personnel terminal (3) for use by maintenance personnel (30); and
    a design support device (1) capable of communicating with the designer terminal (2) and the maintenance personnel terminal (3), wherein
    the design support device (1) includes
    a failure causal model database (12a) configured to store a failure causal model (M) of a target equipment,
    a failure causal model updating unit (13a) configured to update the failure causal model (M) based on an assumed cause of a failure of the target equipment input from the designer terminal (2),
    a maintenance support unit (13b) configured to estimate a type and a cause of a failure having a high occurrence probability based on a symptom of the target equipment corresponding to a symptom of a failed target equipment input from the maintenance personnel terminal (3) when the failed target equipment is maintained and based on the failure causal model (M) updated by the failure causal model updating unit (13a), and configured to output the estimated result to the maintenance personnel terminal (3), wherein the design support system is **characterized by** comprising:
    a maintenance record database (12b) configured to store, as a maintenance record, authenticity information for the type of the failure and the cause thereof estimated by the maintenance support unit (13b), wherein the authenticity information is input from the maintenance personnel terminal (3) based on the type of the failure and the cause thereof found as a result of an actual maintenance work, and
    a failure cause analysis unit (13c) configured to update the failure causal model (M) of the failure causal model database (12a) based on the authenticity information stored as the maintenance record in the maintenance record database (12b), configured to estimate a failure cause of the target equipment based on the failure causal model (M) updated by the failure cause analysis unit (13c), and configured to output the estimated failure cause of the target equipment to the designer terminal (2).

2.  The design support system according to claim 1, wherein
    the failure causal model updating unit (13a) is configured to update the failure causal model (M) based on a failure occurrence probability when the assumed cause of the failure of the target equipment is true.

3.  The design support system according to claim 1, wherein

    the designer terminal (2) is configured to display thereon
    a failure type input field for inputting a failure type of the target equipment,
    an assumed cause input field for inputting the assumed cause of the failure type input into the failure type input field; and
    a failure occurrence probability input field for inputting the failure occurrence probability when the assumed cause input into the assumed cause input field is true.

4.  The design support system according to claim 1, wherein

    the maintenance personnel terminal (3) is configured to display thereon
    a symptom authenticity input field for inputting the authenticity of the symptom of the target equipment,
    a failure authenticity input field for inputting the authenticity of the estimated failure of the target equipment, and
    a cause authenticity input field for inputting the authenticity of the estimated failure cause of the target equipment.

5.  The design support system according to any one of claims 1 to 4, further comprising:
    a maintenance record monitoring unit (13d) configured to monitor the maintenance records stored daily in the maintenance record database (12b) and to issue an alert to the designer (20) when a change in failure occurrence frequency is found.

**Patentansprüche**

1. Designunterstützungssystem, das Folgendes umfasst:

   ein Designer-Endgerät (2) für die Verwendung durch Designer (20);
   ein Wartungspersonal-Endgerät (3) für die Verwendung durch Wartungspersonal (30); und
   eine Designunterstützungsvorrichtung (1), die mit dem Designerendgerät (2) und dem Wartungspersonal-Endgerät (3) kommunizieren kann, wobei die Designunterstützungsvorrichtung (1) enthält:

   eine Ausfallskausalmodell-Datenbank (12), die konfiguriert ist, ein Ausfallskausalmodell (M) eines Zielgeräts zu speichern,
   eine Ausfallskausalmodell-Aktualisierungseinheit (13a), die konfiguriert ist, das Ausfallskausalmodell (M) anhand einer angenommenen Ursache eines Ausfalls des Zielgeräts, die von dem Designerendgerät (2) eingegeben wird, zu aktualisieren,
   eine Wartungsunterstützungseinheit (13b), die konfiguriert ist, einen Typ und eine Ursache eines Ausfalls mit einer hohen Auftrittswahrscheinlichkeit anhand eines Symptoms des Zielgeräts, das einem Symptom eines ausgefallenen Zielgeräts entspricht und das von dem Wartungspersonal-Endgerät (2) eingegeben wird, wenn das ausgefallene Zielgerät gewartet wird, und anhand des Ausfallskausalmodells (M), das durch die Ausfallskausalmodell-Aktualisierungseinheit (13a) aktualisiert wird, zu schätzen,

   und konfiguriert ist, das geschätzte Ergebnis an das Wartungspersonal-Endgerät (3) auszugeben, wobei das Designunterstützungssystem **dadurch gekennzeichnet ist, dass** es umfasst:

   eine Wartungsaufzeichnungs-Datenbank (12b), die konfiguriert ist, als eine Wartungsaufzeichnung Authentizitätsinformationen für den Typ des Ausfalls und die Ursache davon, die durch die Wartungsunterstützungseinheit (13b) geschätzt wird, zu speichern, wobei die Authentizitätsinformationen von dem Wartungspersonal-Endgerät (3) anhand des Typs des Ausfalls und der Ursache davon, die als ein Ergebnis einer tatsächlichen Wartungsarbeit gefunden wurde, eingegeben werden, und
   eine Ausfallsursachen-Analyseeinheit (13c), die konfiguriert ist, das Ausfallskausalmodell (M) der Ausfallskausalmodell-Datenbank (12a) anhand der Authentizitätsinformationen, die als die Wartungsaufzeichnung in der Wartungsaufzeichnungs-Datenbank (12b) gespeichert sind, zu aktualisieren, konfiguriert ist, eine Ausfallsursache des Zielgeräts anhand des Ausfallskausalmodells (M), das durch die Ausfallsursachen-Analyseeinheit (13c) aktualisiert wird, zu schätzen, und konfiguriert ist, die geschätzte Ausfallsursache des Zielgeräts an das Designergerät (2) auszugeben.

2. Designunterstützungssystem nach Anspruch 1, wobei
   die Ausfallskausalmodell-Aktualisierungseinheit (13a) konfiguriert ist, das Ausfallkausalmodell (M) anhand einer Ausfallsauftrittswahrscheinlichkeit zu aktualisieren, wenn die angenommene Ursache des Ausfalls des Zielgeräts wahr ist.

3. Designunterstützungssystem nach Anspruch 1, wobei
   das Designerendgerät (2) konfiguriert ist, auf ihm anzuzeigen:

   ein Ausfallstypeingabefeld zum Eingeben eines Ausfallstyps des Zielgeräts,
   ein Eingabefeld für eine angenommene Ursache zum Eingeben der angenommenen Ursache des Ausfallstyps, die in das Ausfallstypeingabefeld eingegeben wird; und
   ein Ausfallsauftrittswahrscheinlichkeits-Eingabefeld zum Eingeben der Ausfallsauftrittswahrscheinlichkeit, wenn die angenommene Ursache, die in das Eingabefeld für die angenommene Ursache eingegeben wurde, wahr ist.

4. Designunterstützungssystem nach Anspruch 1, wobei das Wartungspersonal-Endgerät (3) konfiguriert ist, auf ihm anzuzeigen:

   ein Symptomauthentizitäts-Eingabefeld zum Eingeben der Authentizität des Symptoms des Zielgeräts,
   ein Ausfallsauthentizitäts-Eingabefeld zum Eingeben der Authentizität des geschätzten Ausfalls des Zielgeräts und
   ein Ursachenauthentizitäts-Eingabefeld zum Eingeben der Authentizität der geschätzten Ausfallsursache des Zielgeräts.

**5.** Designunterstützungssystem nach einem der Ansprüche 1 bis 4, das ferner umfasst:
eine Wartungsaufzeichnungs-Überwachungseinheit (13d), die konfiguriert ist, die täglich in der Wartungsaufzeichnungs-Datenbank (12b) gespeicherten Wartungsaufzeichnungen zu überwachen und eine Warnung an den Designer (20) auszugeben, wenn eine Änderung der Ausfallsauftrittshäufigkeit gefunden wird.

**Revendications**

**1.** Système de support de conception comprenant :

un terminal de concepteurs (2) destiné à être utilisé par des concepteurs (20) ;
un terminal de personnel de maintenance (3) destinée à être utilisé par un personnel de maintenance (30) ; et
un dispositif de support de conception (1) capable de communiquer avec le terminal de concepteurs (2) et le terminal de personnel de maintenance (3), dans lequel
le dispositif de support de conception (1) inclut
une base de données de modèle de cause de défaillance (12a) configuré pour stocker un modèle de cause de défaillance (M) d'un équipement cible,
une unité de mise à jour de modèle de cause de défaillance (13a) configurée pour mettre à jour le modèle de cause de défaillance (M) sur la base d'une cause présumée d'une défaillance de l'équipement cible entrée depuis le terminal de concepteurs (2),
une unité de support de maintenance (13b) configurée pour estimer un type et une cause d'une défaillance ayant une probabilité d'occurrence élevée sur la base d'un symptôme de l'équipement cible correspondant à un symptôme d'un équipement cible défaillant entré depuis le terminal de personnel de maintenance (3) quand l'équipement cible défaillant est maintenu et sur la base du modèle de cause de défaillance (M) mis à jour par l'unité de mise à jour de modèle de cause de défaillance (13a), et configurée pour sortir le résultat estimé vers le terminal de personnel de maintenance (3),
dans lequel le système de support conception est **caractérisé en ce qu'**il comprend :

une base de données d'enregistrement de maintenance (12b) configurée pour stocker, à titre d'enregistrement de maintenance, une information d'authenticité pour le type de la défaillance et la cause de celle-ci estimés par support de maintenance (13b), l'information d'authenticité étant entrée depuis le terminal de personnel de maintenance (3) sur la base du type de la défaillance et de la cause de celle-ci trouvés comme résultat d'une opération de maintenance actuelle, et
une unité d'analyse de cause de défaillance (13c) configurée pour mettre à jour le modèle de cause défaillance (M) de la base de données de modèle de cause de défaillance (12a) sur la base de l'information d'authenticité stockée à titre d'enregistrement de maintenance dans la base de données d'enregistrement de maintenance (12b), configurée pour estimer une cause de défaillance de l'équipement cible sur la base du modèle de cause de défaillance (M) mis à jour par l'unité d'analyse de cause de défaillance (13c), et configurée pour sortir la cause de défaillance estimée de l'équipement cible au terminal de concepteurs (2).

**2.** Système de support de conception selon la revendication 1, dans lequel l'unité de mise à jour de modèle de cause de défaillance (13a) est configurée pour mettre à jour le modèle de cause de défaillance (M) sur la base d'une probabilité d'occurrence de défaillance quand la cause présumée de la défaillance de l'équipement cible est avérée.

**3.** Système de support de défaillance selon la revendication 1, dans lequel

le terminal de concepteurs (2) est configuré pour afficher sur lui-même
un champ de saisie de type de défaillance destiné à saisir un type de défaillance de l'équipement cible,
un champ de saisie de cause présumée destinée à saisir la cause présumée du type de défaillance saisi dans le champ de saisie de type de défaillance ; et
un champ de saisie de probabilité d'occurrence de défaillance destiné à saisir la probabilité d'occurrence de défaillance quand la cause présumée saisie dans le champ de saisie de cause présumée est avérée.

**4.** Système de support de conception selon la revendication 1, dans lequel

le terminal de personnel de maintenance (3) est configuré pour afficher sur lui-même un champ de saisie d'authenticité de symptôme destiné à saisir l'authenticité du symptôme de l'équipement cible,
un champ de saisie d'authenticité de défaillance destiné à saisir l'authenticité de la défaillance estimée de l'équipement cible, et
un champ de saisie d'authenticité de cause destiné à saisir l'authenticité de la cause de défaillance estimée de l'équipement cible.

5. Système de support de conception selon l'une quelconque des revendications 1 à 4, comprenant en outre :
une unité de surveillance d'enregistrement de maintenance (13d) configurée pour surveiller les enregistrements de maintenance stockés quotidiennement dans la base de données d'enregistrement de maintenance (12b) et pour émettre une alerte au concepteur (20) quand un changement dans une fréquence d'occurrence de défaillance est trouvé.

# FIG. 1

## FIG. 2

## FIG. 3

| ID | DATE | CAUSE 1 | ... | CAUSE M | FAILURE 1 | ... | FAILURE N | SYMPTOM 1 | ... | SYMPTOM P |
|----|--------|---------|-----|---------|-----------|------|-----------|-----------|-----|-----------|
| 1 | 190412 | True | ... | False | True | ... | False | True | ... | True |
| 2 | 190413 | False | ... | False | False | ... | True | False | ... | False |
| 3 | | | | | | | | | | |

# FIG. 4

20 DESIGNER

ASSUMED
CAUSE OF FAILURE

PLAUSIBLE
FAILURE CAUSE

13a — FAILURE CAUSAL
MODEL UPDATING
UNIT

FAILURE
CAUSAL MODEL

FAILURE CAUSE
ANALYSIS UNIT — 13c

FAILURE
CAUSAL
MODEL

FAILURE CAUSAL
MODEL TO WHICH
CAUSE WAS ADDED

MAINTENANCE
RECORD

12a — FAILURE CAUSAL
MODEL DATABASE

FAILURE CAUSAL MODEL
IN WHICH PROBABILITY
INFORMATION IS UPDATED

MAINTENANCE
RECORD DATABASE — 12b

FAILURE
CAUSAL
MODEL

MAINTENANCE
RECORD

MAINTENANCE SUPPORT UNIT

13b

FAILURE
SYMPTOM

ESTIMATION OF
FAILURE TYPE
AND CAUSE

ESTIMATION
AUTHENTICITY

30

MAINTENANCE
PERSONNEL

# FIG. 5

START

DESIGNER INPUTS ASSUMED CAUSE
OF FAILURE TO DESIGNER TERMINAL — S1

FAILURE CAUSAL MODEL UPDATING UNIT
UPDATES FAILURE CAUSAL MODEL
BASED ON INPUT ASSUMED CAUSE — S2

S3 — IS MAINTENANCE PERIOD
AND FREQUENCY OF MAINTENANCE EQUAL
TO OR GREATER THAN PREDETERMINED
THRESHOLD VALUE?

No →

Yes ↓

S4 — MAINTENANCE PERSONNEL INPUTS
FAILURE SYMPTOM TO
MAINTENANCE PERSONNEL TERMINAL

S5 — MAINTENANCE SUPPORT UNIT ESTIMATES
FAILURE TYPE BASED ON INPUT FAILURE
SYMPTOM AND PRESENTS FAILURE CAUSE

S8 — FAILURE CAUSE ANALYSIS UNIT UPDATES
PROBABILITY INFORMATION OF FAILURE
CAUSAL MODEL AND PRESENTS PLAUSIBLE
FAILURE CAUSE TO DESIGNER BASED ON
MAINTENANCE RECORD AND
FAILURE CAUSE MODEL

S6 — MAINTENANCE PERSONNEL MAINTAINS
FAILED EQUIPMENT BASED ON PRESENTED
FAILURE TYPE AND FAILURE CAUSE,
AND INPUTS AUTHENTICITY OF
FAILURE TYPE AND FAILURE CAUSE
TO MAINTENANCE PERSONNEL TERMINAL

S7 — MAINTENANCE SUPPORT UNIT STORES
INPUT AUTHENTICITY TO MAINTENANCE
RECORD DATABASE AS MAINTENANCE
RECORD

END

## FIG. 6

FAILURE TYPE  *2a*

| FAILURE i | ▽ |
| FAILURE 1 | |
| FAILURE 2 | |

NAME  *2b*        PROBABILITY *2c*

ASSUMED CAUSE 1  | CAUSE X |        | 0.5 | %

ASSUMED CAUSE 2  | |        | | %

⊞ ADD ESTIMATED CAUSE

# FIG. 7

EP 3 862 834 B1

# FIG. 8

YES    NO

Q1. IS THERE SYMPTOM 1?  ☑  ☐

Q2. IS THERE SYMPTOM 2?  ☐  ☑

Q3. IS THERE SYMPTOM 3?  ☑  ☐

~3a

ESTIMATED FAILURE TYPE AND CAUSE THEREOF ARE AS FOLLOWS.
ESTIMATED FAILURE TYPE

TRUE    NOT TRUE

· FAILURE i  ☑  ☐

~3b

CAUSE ASSUMED BY ABOVE FAILURE

TRUE    NOT TRUE

· CAUSE 1  ☑  ☐

· CAUSE 2  ☐  ☑

· CAUSE X  ☑  ☐

17

# FIG. 9

# FIG. 10

## FIG. 11

```
              ┌──────────────┐
              │    START     │
              └──────┬───────┘
                     │
                     ▼
         ┌────────────────────────┐
    S11  │   MAINTENANCE RECORD   │
         │    MONITORING UNIT     │
         │ MONITORS FAILURE RECORD│
         └───────────┬────────────┘
                     │
                     ▼
    S12        ◇ IS THERE ◇              No
            ◇ NOTICEABLE CHANGE? ◇ ──────────┐
                     │                        │
                    Yes                       │
                     │                        │
                     ▼                        │
         ┌────────────────────────┐           │
    S13  │   MAINTENANCE RECORD   │           │
         │ MONITORING UNIT ISSUES │           │
         │   ALERT TO DESIGNER    │           │
         └───────────┬────────────┘           │
                     │                        │
                     ▼                        │
         ┌────────────────────────┐           │
         │        S1～S8          │           │
         └───────────┬────────────┘           │
                     │                        │
                     ▼                        │
              ┌──────────────┐                │
              │     END      │                │
              └──────────────┘                │
```

20

**EP 3 862 834 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012150686 A
- US 2005049988 A1

- US 2012310597 A1